# EUROPEAN PATENT SPECIFICATION

(11) **EP 1 211 057 B1**
(45) Date of publication and mention of the grant of the patent: **15.02.2006**
(21) Application number: 01309801.7
(22) Date of filing: 21.11.2001
(51) Int. Cl.: B29D 30/30, B29D 30/60, B60C 9/20, B29D 30/20, B29D 30/36

(54) **Method for manufacturing a pneumatic tire**
Verfahren zur Reifenherstellung
Procédé de fabrication de pneu

(30) Priority: 22.11.2000 JP 2000355449; 28.12.2000 JP 2000400918
(43) Date of publication of application: 05.06.2002
(60) Divisional application: 04022540.1
(73) Proprietor: Bridgestone Corporation, Tokyo 104-0031 (JP)
(72) Inventor: Ogawa, Yuichiro. c/oBridgestone Corp. Tech.Center, Kodaira City, Tokyo (JP); Iizuka, Shubei. c/o Bridgestone Corp. Tech. Center, Kodaira City, Tokyo (JP)
(74) Representative: Whalley, Kevin

(56) References cited:
- EP-A- 0 747 207
- EP-A- 1 145 832
- WO-A-01/36186
- WO-A-98/54008
- DE-C- 19 718 699
- GB-A- 992 631
- GB-A- 1 592 854
- US-A- 3 901 750
- US-A- 3 904 463
- US-A- 4 597 929
- US-A- 5 587 030
- US-A- 5 746 860

## Description

The present invention relates to a method for manufacturing a pneumatic tire, particularly a radial tire, which not only satisfies the requirements imposed on various tire constitutive elements in terms of shape and material, but also enables a highly precise formation thereof.

A conventional, widely adopted method for manufacturing pneumatic tires comprises formation of a green tire by winding various tire constitutive members, which are made of rubber materials and pre-molded in the foregoing step, around a shaping drum one over another in orderly fashion for adhesive joining; and deforming those tire constitutive members into respectively predetermined shapes.

With increased demand for high performance tires in recent years, the requirement for tire constitutive members became stronger and the shape of the members became complicated accordingly. When such tire constitutive members are wound around a tire shaping drum according to the conventional method, the precision with regard to the winding position tends to degrade, or irregularities tend to develop at the joints between different constitutive members wound around the tire shaping drum, because there may occur a significant difference in circumferential length between inner members and outer members both of which have a complicated form, and thus the uniformity and balance of the tire product may be impaired.

On the other hand, there is not infrequently a case where the tire constitutive members cannot be integrally formed into a unit to give a desired shape owing, for example, to the requirement imposed by the equipment of the preceding steps responsible for the pre-molding of those tire constitutive members. In such a case, the constitutive members are divided into a plurality of sub-units, which are separately pre-molded and assembled to give a tire with a desired shape. However, according to this method, the number of necessary units increases which in turn causes the number of steps introduced for winding constitutive members around a shaping drum and the number of joints observed on the shaping drum to increase. This not only lowers the efficiency in the formation of a green tire but also degrades the uniformity and balance of the tire.

Moreover, if a tire constitutive member has a laminated rubber structure composed of different rubber layers, the tire constitutive member pre-molded may have the risk of becoming unstable in its shape because of qualitative differences among those rubber layers.

Attention is drawn to the disclosures of EP-0747207A (which reflects the prior art discussed above), US-5746860A and DE-19718699C.

It is a primary object of the present invention to provide an improved method for manufacturing a pneumatic tire, which eliminates the above-mentioned problems of the prior art.

It would be highly desirable that the method according to the present invention makes it possible (i) to securely form tire constitutive elements which are pre-molded in a desired shape, into a desired shape at any given time, even when they are made of a plurality of rubber materials having different properties, without causing the number of necessary units to increase; (ii) to wind the tire constitutive members around a shaping drum without exposing them to the risk of being degraded in positioning precision due to the winding itself; (iii) to improve the efficiency of the work necessary involved in tire building, as well as the uniformity and balance of tire product; and/or (iv) to prevent the tire from being exposed to the risk of being degraded in performance due to possible existence of irregular joints between the tire constitutive members.

According to the present invention, there is provided a method for manufacturing a pneumatic tire, wherein at least one kind of tire constitutive member is formed on an outer peripheral side of a carcass band, said method comprising the steps, for forming a green tire, of:
radially outwardly expanding a widthwise center portion of a cylindrical carcass band; and
winding and joining an unvulcanized rubber strip onto an outer peripheral surface of the expanded carcass band, thereby forming said tire constitutive member, wherein said tire constitutive member includes any one of bead filler, sidewall, rubber chafer, buffer rubber, and belt undercushion.

In this case, it is also possible to spirally wind two or more kinds of unvulcanized rubber strips in succession to form a tire constitutive member.

With the above-mentioned method according to the present invention, for example, an unvulcanized rubber strip 5 - 20mm in width and 0.2 - 3mm in thickness is wound on the outer peripheral surface of a carcass band deformed in advance by expansion into a shape similar to that of a green tire, by being discharged from an extrusion machine, injection/extrusion machine or constant volume extrusion machine, and laid one turn over another to form a lamination for serving as a necessary constitutive tire member. Therefore, even if the tire constitutive member is designed to have a complicated shape, it is possible to produce the tire constitutive member simply, easily and precisely without being restricted by the requirement imposed by the tire building equipment.

Further, because the method according to the present invention comprises directly winding a strip onto the tire outer peripheral surface, it allows the constitutive member to be positioned far more precisely than with the method wherein the previously molded constitutive member is applied by adhesion on the tire outer peripheral surface, and irregularities at joints to be more effectively eliminated. As a consequence, the method according to the present invention makes it possible to significantly improve the efficiency of the work involved in tire building, as well as the uniformity and balance of the product tire.

In addition, with the method according to the present invention, because a strip is directly wound onto the outer peripheral surface of the carcass band to form a tire constitutive member thereupon, it is possible to thoroughly eliminate the instability in form of the constitutive member even if the constitutive member is made of different rubber materials, because the method allows winding strips of different materials one after another in succession.

It is preferred to vary the cross-sectional shape of a strip in accordance with the desired shape of the tire constitutive member the strip is made into, and to wind the strip such that, for each turn, a preceding turn is superimposed at least partially by a succeeding turn.

Through such procedure, it is possible to further improve the precision in terms of positioning of the tire constitutive member, and the uniformity thereof.

The above features also holds for a method wherein at least one kind of further tire constitutive member, such as a tread, inter-belt cushion or tread under-cushion, is formed on an outer peripheral side of a carcass band, said method further comprising the steps, for forming a green tire, of: applying a belt layer onto an outer peripheral surface of the expanded carcass band; and winding and joining at least one further kind of unvulcanized rubber strip onto an outer peripheral surface of the belt layer, thereby forming said further tire constitutive member.

The former method wherein a strip is wound on the outer peripheral surface of an expanded carcass band, may be combined with the latter method wherein plural strips are wound on the outer peripheral surface of a belt attached to an expanded carcass band, so as to further improve the uniformity and balance of the tire.

The present invention will be further described below with reference to preferred embodiments shown in the accompanying drawings, wherein

FIGS. 1a and 1b are schematic views showing the method of manufacturing a pneumatic tire according to one embodiment of the present invention;

FIG. 2 is a schematic view showing the method of manufacturing a pneumatic tire according to another embodiment of the present invention;

FIGS. 3a, 3b and 3c are schematic views showing the method of manufacturing a pneumatic tire according to yet another embodiment of the present invention;

FIG. 4 is a schematic view showing the method of manufacturing a pneumatic tire according to a further embodiment of the present invention; and

FIG. 5 is a schematic view showing the method of manufacturing a pneumatic tire according to a yet further embodiment of the present invention.

According to the present invention, first of all, a carcass ply consisting of ply cords is applied to a carcass band drum in such a way as to cause the cords to extend in the circumferential direction of the drum, in order to deform the carcass ply into a cylindrical shape, thereby producing a carcass band. Then, for example, bead cores are attached to both marginal portions of this carcass band, and the marginal portions of carcass band are folded back around bead fillers and the bead cores.

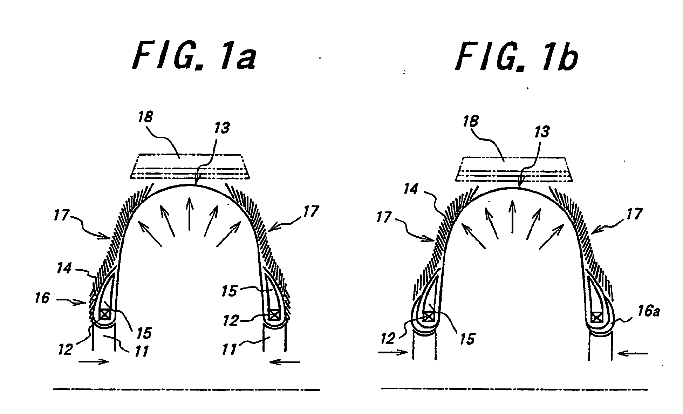

With regard to the carcass band configured as above, while it is applied to the carcass band drum or to other means such as a formalizing means, both bead rocks 11 are diverged from each other to elongate the radius as shown in FIGS. 1a and 1b to be stabilized there; a pressurized gas is fed directly, or indirectly via a bladder, into the space surrounded by the inner face of a carcass band 13, thereby causing the center portion of the carcass band 13 to expand outward in the radial direction under a circumstance where both bead rocks, or more accurately both bead cores 12 are being converged towards each other; in the above state, an unvulcanized rubber strip 14 whose material and dimension are appropriately chosen and which is extruded, for example, from a nozzle of an extrusion machine, is applied on the outer peripheral surface of the carcass band by being spirally wound once or plural times thereupon in such a way as to cause a preceding turn to be superimposed at least partially by a succeeding turn within a desired range along a circular direction; and thereby a tire constitutive member generally having a desired shape and dimension is obtained.

FIG. 1a shows a case where a rubber chafer 16 and a sidewall 17 are obtained by this method, that is by winding respective strips such that one turn is superimposed by another to form a lamination, excepting a bead filler which is positioned adjacent to the outer peripheral surface of the bead core 12. FIG. 1b shows a case where the sidewall 17 is obtained by winding a strip while a rubber chafer 16a is obtained by a conventional method including application of a band by adhesion.

After necessary tire constitutive members are formed as above, for example, increasing the degree of deformation by expansion of the carcass band 13, and bringing the crown portion thereof into intimate contact with a belt tread band 18 (to be referred to as a "BT band" hereinafter) which has been pre-molded to give a definitive dimension in its external and internal diameters, results in the formation of a completed green tire.

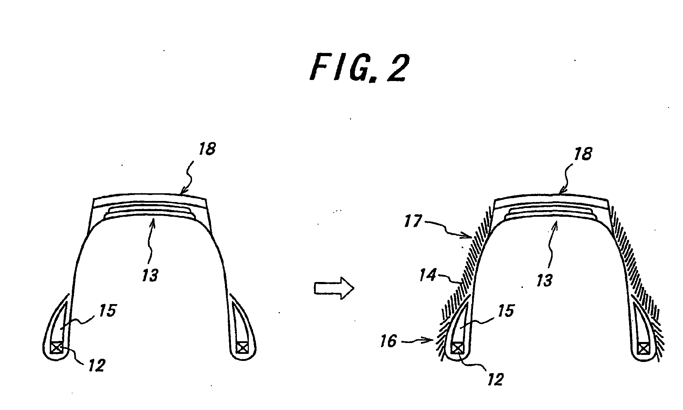

FIG. 2 shows a method whereby the center portion of carcass band 13 is intensively deformed by expansion to such an extent that the center portion comes into intimate contact with a BT band 18, before application of rubber chafer 16 and sidewall 17 to the carcass band is achieved by winding respective unvulcanized rubber strips 14 thereupon. According to this method, the rubber chafer 16 and sidewall 17 are relieved of deformations associated with expansion which could otherwise occur if they were applied and then the expansion of the carcass band introduced. This will contribute to improve their shape and positioning precision.

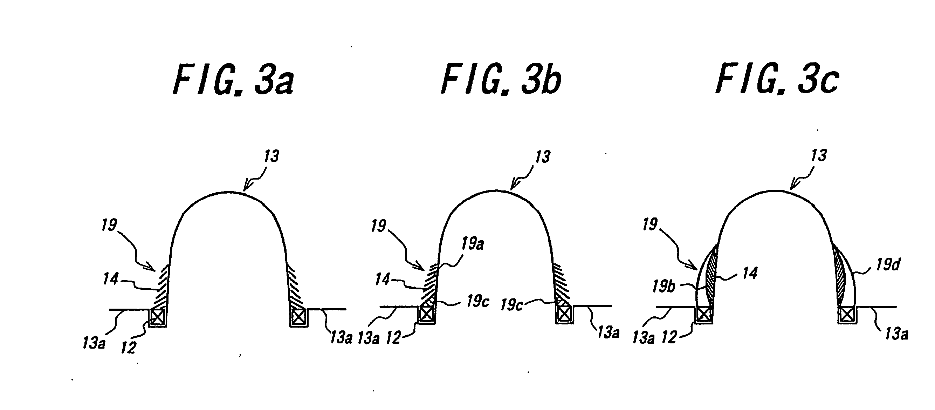

FIGS. 3a, 3b and 3c show an illustrative example where formation of a bead filler or a tire constitutive member is achieved by spirally winding an unvulcanized rubber strip on the carcass band. FIG. 3a shows a case where formation of a bead filler 19 is achieved by winding an unvulcanized rubber strip 14 on the outer peripheral portion close to a bead core 12, before a marginal portion 13a of the carcass band 13 is folded back around the bead core 12.

In this case, the entire bead filler 19 may be made of one kind of rubber, or it may be made of two kinds of rubbers which differ, for example, in respect of hardness or post-vulcanization properties.

FIGS. 3b and 3c show a case where, of a bead filler 19, a portion 19a located at a distal position and another portion 19b located at a proximal position in the radial direction are separately obtained by winding respective unvulcanized rubber strips 14 while the remaining portions 19c and 19d are formed in advance by molding rubber materials the same or different with or from the above rubber materials into a desired shape.

According to any one of the above methods, if the marginal portion 13a of carcass band 13 is folded back around bead core 12, the bead filler 19 will be wrapped up together with bead core 12 into the marginal portion 13a.

The subsequent steps may proceed according to the methods as discussed above with respect to FIGS. 1a, 1b or FIG. 2, or to the methods described later.

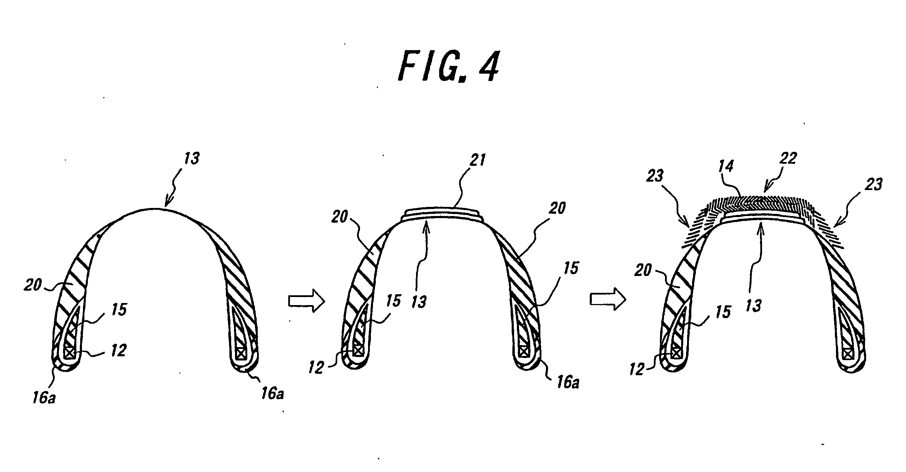

FIG. 4 shows a case where a bead filler 15, rubber chafer 16a and sidewall 20 all pre-molded are applied around a carcass band 13 by winding those members thereupon to adhere thereto using a conventional technique; after the center portion of the carcass band 13 is deformed by expansion until it is brought into intimate contact with the inner circular face of a belt layer ring 21 properly set in advance, an unvulcanized rubber strip 14 consisting of one or two kinds of rubber materials are applied to the outer peripheral face of the belt layer ring 21 by spirally winding the rubber strip thereupon; and thus a tread 22 having a cap-base structure with conductive layers penetrating the cap and base in the radial direction is formed on the center portion of carcass band 23.

In this case, together with the formation of the tread 22, formation of a mini-sidewall 23 for bridging the tread 22 and the sidewall 20 may be introduced by spirally winding a strip on the relevant area. Alternatively, only the tread 22 may be formed. In the latter case, a pre-molded mini-sidewall may be added after the tread 22 has been formed.

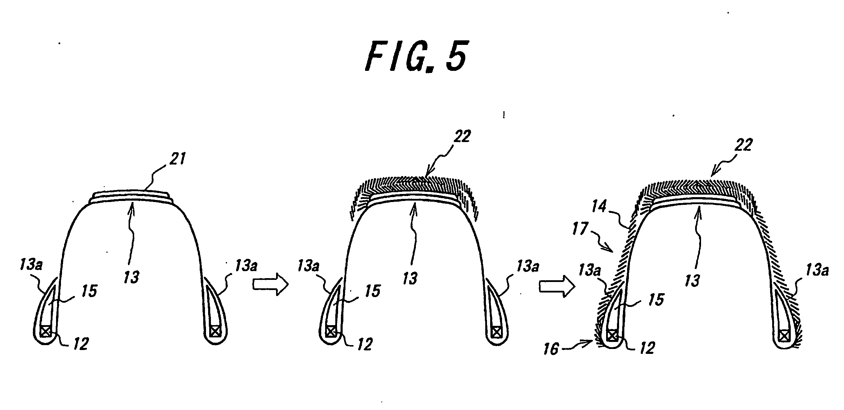

FIG. 5 shows a still further embodiment where the center portion of a carcass band 13 is intensively deformed by expansion so as to be brought into intimate contact with a belt layer ring 21 while its folded-back marginal portion 13a contains a bead core 12 and bead filler 15 in its folded-back portion; a belt 22 is formed by the method described above with respect to FIG. 4; then a sidewall 17 and a rubber chafer 16 are formed by the method described above with respect to FIG. 1a.

In this embodiment, it is also possible to form a sidewall 17 and rubber chafer 16 before the formation of the tread 22.

The preferred embodiments of the present invention have been described with reference to the accompanying figures. However, needless to say, the present invention also applies to the manufacture of a so-called bead coreless tire. Further, the tire constitutive member may include a buffer rubber to be applied on the carcass ply, and a belt undercushion to be inserted between the belt layer and the carcass band, and a tread undercushion to be inserted between the tread and the belt.

As discussed above, according to the present invention, it is possible to securely confer tire constitutive members with their respective desired shapes at all times, even if they are made of different kinds of rubber materials, by applying unvulcanized rubber strips having a desired dimension and made of materials satisfying given requirements, by spirally winding them on a carcass band, without requiring an increased number of necessary parts therefor, and without exposing the members to the risk of becoming unstable in their shape. It is also possible to prevent lowering of positioning precision caused by the winding of the tire constitutive element itself; to significantly improve the uniformity and balance of tire product as well as the work efficiency; and to satisfactorily prevent occurrence of impaired uniformity or balance which may arise as a result of irregularities at the joints between different constitutive members.

## Claims

1. A method for manufacturing a pneumatic tire, wherein at least one kind of tire constitutive member is formed on an outer peripheral side of a carcass band (13), said method comprising the steps, for forming a green tire, of:
radially outwardly expanding a widthwise center portion of a cylindrical carcass band (13); and
winding and joining an unvulcanized rubber strip (14) onto an outer peripheral surface of the expanded carcass band (13), thereby forming said tire constitutive member, wherein said tire constitutive member includes any one of bead filler (19), sidewall (17), rubber chafer (16), buffer rubber, and belt undercushion.

2. The method as claimed in claim 1, **characterized in that** the strip (14) is formed to have a cross-section that is determined depending on the shape of the tire constitutive member, and winding the strip so as to superimpose, for each turn, a previously wound strip at least partially by a successively wound strip.

3. The method as claimed in claim 1 or 2, **characterized in that** two or more kinds of unvulcanized rubber strips (14) are wound one after another, to form a tire constitutive member.

4. The method as claimed in any of claims 1 to 3, **characterized by** further comprising the steps of
applying a belt layer onto an outer peripheral surface of the expanded carcass band (13); and
winding and joining at least one further kind of unvulcanized rubber strip onto an outer peripheral surface of the belt layer, thereby forming a further tire constitutive member, wherein said further tire constitutive member includes any one of tread (22), interlayer cushion between adjacent belt layers, and tread undercushion.

## Patentansprüche

1. Verfahren zur Herstellung eines Luftreifens, bei dem wenigstens eine Art von Reifenbestandteil auf einer äußeren peripheren Seite eines Karkassenbandes (13) gebildet wird, wobei das Verfahren die folgenden Schritte zum Bilden eines Reifenrohlings umfasst:
Ausdehnen eines breitenmäßig mittleren Abschnitts eines zylindrischen Karkassenbandes (13) radial nach außen; und
Wickeln und Verbinden eines Rohgummistreifens (14) auf/mit eine(r) äußere(n) periphere(n) Fläche des ausgedehnten Karkassenbandes (13), um dadurch den Reifenbestandteil zu bilden, wobei der Reifenbestandteil einer der Folgenden sein kann: Wulstfüllmaterial (19), Seitenwand (17), Gummiwulstband (16), Puffergummi und Gürtelpolster.

2. Verfahren nach Anspruch 1, **dadurch gekennzeichnet, dass** der Streifen (14) so gebildet ist, dass er einen Querschnitt hat, der je nach der Form des Reifenbestandteils bestimmt wird, wobei der Streifen so gewickelt wird, dass bei jeder Umdrehung ein zuvor gewickelter Streifen wenigstens teilweise von einem nachfolgend gewickelten Streifen überlagert wird.

3. Verfahren nach Anspruch 1 oder 2, **dadurch gekennzeichnet, dass** zwei oder mehr Arten von Rohgummistreifen (14) nacheinander gewickelt werden, um einen Reifenbestandteil zu bilden.

4. Verfahren nach einem der Ansprüche 1 bis 3, **dadurch gekennzeichnet, dass** es ferner die folgenden Schritte umfasst:
Aufbringen einer Gürtellage auf eine äußere periphere Oberfläche des ausgedehnten Karkassenbandes (13); und
Wickeln und Verbinden von wenigstens einer weiteren Art von Rohgummistreifen auf/mit eine(r) äußere(n) periphere(n) Oberfläche der Gürtelschicht, um dadurch einen weiteren Reifenbestandteil zu bilden, wobei der weitere Reifenbestandteil entweder eine Lauffläche (22), ein Zwischenpolster zwischen benachbarten Gürtelschichten oder ein Laufflächenpolster ist.

## Revendications

1. Procédé de fabrication d'un bandage pneumatique, dans lequel au moins type d'élément constitutif de pneu est formé sur un côté périphérique extérieur d'une bande de carcasse (13), ledit procédé comprenant les étapes de formation d'un pneu cru consistant à:
faire croître radialement vers l'extérieur une partie centrale dans le sens de la largeur d'une bande de carcasse cylindrique (13); et
enrouler et joindre une bande de caoutchouc non vulcanisé (14) sur la surface périphérique extérieure de la bande de carcasse expansée (13), en formant de la sorte ledit élément constitutif de pneu, dans lequel ledit élément constitutif de pneu inclut un quelconque élément de bourrage sur tringle (19), de flanc (17), de bandelette talon en caoutchouc (16), de caoutchouc tampon, et de sous-coussin de ceinture.

2. Procédé comme revendiqué dans la revendication 1, **caractérisé en ce que** la bande (14) est formée pour posséder une section transversale qui est déterminée en fonction de la forme de l'élément constitutif du pneu, et en enroulant la bande de manière à superposer, pour chaque tour, une bande enroulée auparavant au moins partiellement avec une bande enroulée par la suite.

3. Procédé comme revendiqué dans la revendication 1 ou 2, **caractérisé en ce que** deux ou plusieurs types de bandes de caoutchouc non vulcanisé (14) sont enroulées l'une après l'autre, pour former un élément constitutif de pneu.

4. Procédé comme revendiqué dans une quelconque des revendications 1 à 3, **caractérisé par le fait qu'**il comprend en outre les étapes consistant à
appliquer une nappe de ceinture sur la surface périphérique extérieure de la bande de carcasse expansée (13); et
enrouler et joindre au moins un type supplémentaire de bande de caoutchouc non vulcanisé sur la surface périphérique extérieure de la nappe de ceinture, en formant de la sorte un élément constitutif de pneu supplémentaire, dans lequel ledit élément constitutif de pneu supplémentaire inclut un quelconque élément de bande de roulement (22), de coussin interlaminaire entre des nappes de ceinture adjacentes, et de sous-coussin de bande de roulement.
